# EUROPEAN PATENT APPLICATION

(11) **EP 4 489 140 A1**
(43) Date of publication of application: **08.01.2025**
(21) Application number: 23763555.2
(22) Date of filing: 02.03.2023
(51) Int. Cl.: H01M 4/62, H01M 4/139, H01M 10/052, H01M 10/0562

(54) **SECONDARY BATTERY BINDER, SECONDARY BATTERY BINDER SHEET, PRODUCTION METHOD THEREFOR, AND SOLID-STATE SECONDARY BATTERY**

(30) Priority: 02.03.2022 JP 2022032056
(71) Applicant: DAIKIN INDUSTRIES, LTD., Osaka-shi, Osaka 530-0001 (JP)
(72) Inventor: YAMADA, Takaya, Osaka-shi, Osaka 530-0001 (JP); YAMADA, Masahiko, Osaka-shi, Osaka 530-0001 (JP); TERADA, Junpei, Osaka-shi, Osaka 530-0001 (JP); FUJIWARA, Kae, Osaka-shi, Osaka 530-0001 (JP); HIRAGA, Kentarou, Osaka-shi, Osaka 530-0001 (JP); SUI, Xianwei, Osaka-shi, Osaka 530-0001 (JP)
(74) Representative: Hoffmann Eitle
(86) International application number: PCT/JP2023/007905
(87) International publication number: WO 2023/167298

(57) **Abstract**

The present disclosure provides a secondary battery mixture containing a sulfide-based electrolyte that has good properties, a secondary battery mixture sheet containing the secondary battery mixture, and a solid-state secondary battery using the secondary battery mixture sheet. The secondary battery mixture includes a sulfide-based solid-state electrolyte and a binder, wherein the binder is a fibrillatable resin. The binder preferably has a fibrous structure with a fibril diameter (median value) of 100 nm or less.

## Description

### Technical Field

The present disclosure relates to a secondary battery mixture, a secondary battery mixture sheet, a production method thereof, and a solid-state secondary battery.

### Background Art

For a lithium ion secondary battery, it is common to produce a solid-state secondary battery sheet by coating a slurry obtained by mixing a binder and a solvent on an electrode active material and a conductive aid and then drying.

Meanwhile, a resin that forms fibrils, such as a polytetrafluoroethylene resin, is also used as a binder by fibrillating the resin.

Patent Literature 1 discloses a method for producing an electrode in which polytetrafluoroethylene is fibrillated by subjecting a mixture including an active material and a polytetrafluoroethylene mixed binder material to a high shear treatment with a jet mill.

Patent Literature 2 discloses that an inorganic sulfide having a specific composition in which a crystal phase and a glass phase coexist is used as a binder to produce a solid-state electrolyte layer, a positive electrode, or a negative electrode.

Patent Literature 3 discloses a solid-state electrolyte-containing sheet that has a solid-state electrolyte-containing layer with a thickness of t µm, which includes fibers having an average diameter d of 0.1 to 2 µm and an average length L of 0.2 to 50 mm prepared by an electrospinning method, a microfluidicer method, or a wet spinning method, and an inorganic solid-state electrolyte, in which L and t satisfy the relationship 100×t≤L≤2500×t.

Patent Literature 4 discloses a method of producing a film by mixing sulfur-based solid ion conductor inorganic particles and a tetrafluoroethylene (TFE) polymer to form a paste, and then calendering or extruding the resultant mixture.

### Citation List

### Patent Literature

Patent Literature 1: Japanese Translation of PCT International Application Publication No. 2017-517862
Patent Literature 2: International Application Publication No. 2018-096957
Patent Literature 3: International Publication No. WO 2019-208347
Patent Literature 4: International Publication No. WO 2021-043493

### Summary of Invention

### Technical Problem

An object of the present disclosure is to provide a secondary battery mixture containing a sulfide-based solid-state electrolyte and which has good properties, a secondary battery mixture sheet containing the mixture, and a solid-state secondary battery using the secondary battery mixture sheet.

Another object of the present disclosure is to provide a secondary battery mixture containing a sulfide-based solid-state electrolyte that, when used as a secondary battery mixture sheet, can be handled without using a support and has high productivity, and a secondary battery mixture sheet containing the mixture.

### Solution to Problem

The present disclosure relates to a secondary battery mixture including a sulfide-based solid-state electrolyte and a binder, in which the binder is a fibrillatable resin.

It is preferred that the fibrillatable resin has a fibrous structure with a fibril diameter (median value) of 100 nm or less.

It is preferred that the fibrillatable resin is a polytetrafluoroethylene resin.

It is preferred that the sulfide-based solid-state electrolyte has an average particle size of 0.1 µm or more and 20 µm or less.

It is preferred that the sulfide-based solid-state electrolyte is represented by the following formula (A):

aLi₂S-bX¹S₂-cLiX²-(1-a-b-c)P₂S₅ (A)

wherein 0.6≤a≤0.86, 0≤b≤0.333, 0≤c≤0.3, 0.05≤b+c≤0.4, X¹ represents Ge, Sn, Ti or Si, X² represents Cl, Br, or I, and any one of b or c is not 0.

It is preferred that the secondary battery mixture is for a lithium ion solid-state secondary battery.

It is preferred that the secondary battery mixture is obtained using a raw material composition containing a sulfide-based solid-state electrolyte and a binder, in which the binder in the raw material composition is a powdered fibrillatable resin.

It is preferred that the raw material composition is substantially free of a liquid medium.

It is preferred that the powdered fibrillatable resin has a moisture content of 500 ppm or less.

It is preferred that the powdered fibrillatable resin is a powdered polytetrafluoroethylene resin.

It is preferred that the powdered polytetrafluoroethylene resin has a standard specific gravity of 2.12 to 2.20.

It is preferred that the powdered polytetrafluoroethylene resin includes 50% by mass or more of a polytetrafluoroethylene resin having a secondary particle size of 450 µm or more.

The present disclosure also relates to a secondary battery mixture sheet including the above-described secondary battery mixture.

The present disclosure also relates to a method for producing a secondary battery mixture sheet including:
(1) applying a shear force while mixing a raw material composition including a sulfide-based solid-state electrolyte and a binder;
(2) forming the secondary battery mixture obtained in (1) into a bulk shape; and
(3) rolling the bulk-shape secondary battery mixture obtained in (2) into a sheet shape,
wherein the binder is a powdered fibrillatable resin.

The present disclosure also relates to a solid-state secondary battery including the above-described secondary battery mixture sheet.

### Advantageous Effects of Invention

In the present disclosure, a battery having reduced deterioration of a sulfide-based solid-state electrolyte can be produced by not using a solvent when forming the secondary battery mixture sheet containing the sulfide-based solid-state electrolyte and using a low-moisture binder in a powder state.

Further, the present disclosure can provide a secondary battery mixture containing a sulfide-based electrolyte that, when used as a secondary battery mixture sheet, can be handled without using a support and has high productivity, and a secondary battery mixture sheet containing the mixture.

### Description of Embodiment(s)

The present disclosure will now be described in detail.

The present disclosure provides a secondary battery mixture that can be suitably used in a sulfide-based solid-state secondary battery, and a mixture sheet containing the same.

In the secondary battery mixture of the present disclosure and the mixture sheet containing the same, a fibrillatable resin such as polytetrafluoroethylene resin (PTFE) is used as a binder. For a conventional solid-state secondary battery mixture, a common method to prepare the solid-state secondary battery mixture is to use a resin that dissolves in a solvent, such as a copolymer of vinylidene fluoride and hexafluoropropylene, as a binder, and coat and dry a slurry containing such a binder.

On the other hand, it is known that when shear stress is applied to PTFE in a particulate state, for example, the PTFE readily forms fibrils. By utilizing this property of readily forming fibrils, PTFE can be used as a binder. That is, the fibrillated PTFE entangles other powder components and the like to bind the powder components, thereby acting as a binder upon forming of the powder components.

The present disclosure has been completed based on the discovery that when obtaining a secondary battery mixture containing sulfide-based solid-state electrolyte, a secondary battery mixture that has good properties, and a mixture sheet containing the same, could be obtained, even without using a solvent, by using fibrillatable resin as a binder.

Further, with the aim of achieving practical application of solid-state secondary batteries, studies were also conducted to improve battery performance such as battery voltage and to industrially produce solid-state secondary batteries. In order to improve handling properties when investigating the performance of a secondary battery mixture and a mixture sheet containing the same, and improve the production efficiency of a solid-state secondary battery, it is desirable for the secondary battery mixture sheet constituting the solid-state secondary battery to be capable of being handled without the use of a support. In addition, from the viewpoint of production suitability, it is desirable for such a secondary battery mixture sheet to be capable of withstanding winding with a large curvature when wound into a roll shape. Therefore, improvement in flexibility is also desirable.

According to the present disclosure, as described above, by using a fibrillatable resin as a binder, a secondary battery mixture sheet can be produced without using a solvent, and thus so a secondary battery mixture sheet can be produced without using a support. Further, by using a sulfide-based solid-state electrolyte, the secondary battery mixture sheet of the present disclosure can be made easy to handle and have good flexibility and strength.

The secondary battery mixture of the present disclosure is obtained using a raw material composition containing a sulfide-based solid-state electrolyte and a binder, and the binder is preferably a powdered fibrillatable resin. Since a powdered binder is used as a raw material instead of a binder-containing dispersion, there is little moisture derived from the raw material in the secondary battery mixture, and so no problems arise due to presence of moisture in the mixture. As a result, there is the advantage that battery performance can be improved. Further, the battery can have excellent ion conductivity.

In addition, it is preferred that the above-described raw material composition is substantially free of a liquid medium. Thus, the secondary battery mixture of the present disclosure has the advantage that a solvent is not used in its production. In other words, in the conventional method for producing a secondary battery mixture, it is common to prepare a slurry in which a powder, which is a component of the secondary battery mixture, is dispersed by using a solvent in which a binder is dissolved, and then prepare the solid-state secondary battery mixture sheet by coating and drying the slurry. In this case, a solvent for dissolving the binder is used. However, the solvents capable of dissolving the binder resin that have conventionally been used are limited to specific solvents such as butyl butyrate. Such solvents react with a sulfide-based solid-state electrolyte and cause the performance of the sulfide-based solid-state electrolyte to degrade, resulting in a decrease in battery performance. In addition, low-polarity solvents such as heptane are very limited in terms of the types of binder resins that they can dissolve, and they have a low flash point, making them difficult to handle.

From the above viewpoint, it is preferred that the content of the liquid medium in the secondary battery mixture of the present disclosure is 1% by mass or less. Further, in the raw material composition as well, the content of the liquid medium is preferably 1% by mass or less.

The secondary battery mixture of the present disclosure has, as a constituent component, a binder having a fibrous structure when forming a secondary battery mixture containing a sulfide-based electrolyte. In the present disclosure, it is important that the binder exists in the form of fibrils. Thus, the object of the present disclosure is achieved by having a fibrillated binder be present in the secondary battery mixture, which acts to bind the powders of the components constituting the secondary battery mixture.

That is, the present disclosure has been completed based on the discovery that when a fibrillatable resin is used as a binder so that the binder in the secondary battery mixture has a fiber structure, a secondary battery mixture having good properties and a mixture sheet containing the same can be obtained.

Further, the binder in the secondary battery mixture preferably has a fibrous structure with a fibril diameter (median value) of 100 nm or less. The presence of a binder with a small fibril diameter in the secondary battery mixture has the effect of further binding together the powder components constituting the secondary battery mixture.

In the present disclosure, the binder is formed into fine fibrils so as to have a fibrous structure with a fibril diameter (median value) of 100 nm or less. When such a fibrillated binder is used as a binder for the secondary battery mixture, deterioration of an oxide-based solid-state electrolyte can be further reduced and a good performance can be exhibited.

The fibril diameter (median value) is a value measured by the following method.
(1) Using a scanning electron microscope (Model S-4800, manufactured by Hitachi, Ltd.), an enlarged photograph (7,000x) of the secondary battery mixture sheet is taken to obtain an image.
(2) Two lines equidistant from each other are drawn on the image in the horizontal direction to divide the image into three equal parts.
(3) The diameter of each fibrillated binder on the upper straight line is measured at three locations, and the average value is taken as the fibrillated binder diameter. The three locations to be measured are the intersection between the fibrillated binder and the straight line, and the locations 0.5 µm above and below the intersection (binder primary particles not formed into fibrils are excluded).
(4) The task of (3) above is then carried out for all the fibrillated binders on the lower straight line.
(5) Starting from the first image, the solid-state secondary battery mixture sheet is moved 1 mm in the right direction of the screen, photographed again, and the diameter of the fibrillated binder is measured according to the above (3) and (4). This is repeated until the number of fibrillated binders measured exceeds 80, and then the measurement is terminated.
(6) The median value of the diameters of all the fibrillated binders measured above is taken as the size of the fibril diameter.

The fibril diameter (median value) is preferably 100 nm or less, more preferably 85 nm or less, and further preferably 70 nm or less. It should be noted that excessive fibril formation tends to result in loss of flexibility. Although the lower limit is not limited, from the viewpoint of strength, for example, the lower limit is preferably not less than 15 nm, more preferably not less than 20 nm, and further preferably not less than 31 nm.

Examples of the method for obtaining a binder having the above-described fibril diameter (median value) include, but are not limited to a method including:
a step (1) of applying a shear force while mixing a raw material composition including a sulfide-based solid-state electrolyte and a binder powder;
a step (2) of forming the secondary battery mixture obtained in step (1) into a bulk shape; and
a step (3) of rolling the bulk-shape secondary battery mixture obtained in step (2) into a sheet shape.

In such a method, for example, by setting the mixing condition of the raw material composition to 3,000 rpm or less in step (1), the fibrillation of the binder can be advanced while maintaining flexibility, and by controlling the shear stress to be applied, the fibril diameter (median value) of the binder can be made 100 nm or less.

Further, it is also preferable to have after the step (3) a step (4) of applying a larger load to the obtained roll sheet and rolling into a thinner sheet. It is also preferred to repeat step (4).

In addition, after the step (3) or step (4), the fibril diameter can be adjusted by having a step (5) of coarsely crushing the obtained roll sheet, then again forming into a bulk shape and rolling into a sheet. The step (5) is preferably repeated, for example, 1 or more times and 12 or less times.

That is, the secondary battery mixture can be produced by applying a shear force to fibrillate the binder powder, which becomes entangled with the powder components such as the sulfide-based solid-state electrolyte. This production method is described later.

The above-described "binder powder" means a solid state as a powder, not a dispersed state mixed with a liquid medium. The object of the present disclosure can be suitably achieved by producing a secondary battery mixture using the binder in such a state, which is a state in which a liquid medium is not present.

It is preferred that the powdered fibrillatable resin serving as the raw material for preparing the secondary battery mixture of the present disclosure has a moisture content of 500 ppm or less.

A moisture content of 500 ppm or less is preferred from the viewpoint of reducing deterioration of the sulfide-based solid-state electrolyte.

More preferably, the moisture content is 300 ppm or less.

In the present disclosure, the fibrillatable resin is a resin that readily forms fibrils when shear stress is applied to fibrillatable resin. By using such a fibrillatable resin as the binder, the fibrillated resin can entangle other powder components and the like to bind the powder components, and thereby act as a binder upon forming of the powder components. Examples of the fibrillatable resin include a liquid crystal polymer (LCP), cellulose, acrylic resin, ultra-high molecular weight polyethylene, PTFE, and the like. Among them, PTFE is preferred in terms of chemical stability, thermal stability, and processability.

In the present disclosure, the PTFE is not limited, and may be a homopolymer or a copolymer that can be fibrillated.

In the case of a copolymer, examples of fluorine atom-containing monomers that are co-monomers include chlorotrifluoroethylene, hexafluoropropylene, fluoroalkylethylene, perfluoroalkylethylene, fluoroalkyl-fluorovinyl ether, and the like.

The powdered PTFE preferably has a standard specific gravity of 2.12 to 2.20. Having a standard specific gravity within the above range is advantageous in that a mixture sheet having a high strength can be produced. The lower limit of the standard specific gravity is more preferably not less than 2.13. The upper limit of the standard specific gravity is more preferably not more than 2.19, and even more preferably not more than 2.18.

The standard specific gravity (SSG) is measured by preparing a sample according to ASTM D-4895-89, and measuring the specific gravity of the obtained sample by the water displacement method.

The powdered PTFE includes preferably 50% by mass or more, and more preferably 80% by mass or more, of polytetrafluoroethylene resin having a secondary particle size of 450 µm or more. When the PTFE having a secondary particle size of 450 µm or more is within the above range, there is an advantage that a high-strength mixture sheet can be produced.

By using PTFE with a secondary particle size of 450 µm or more, it is possible to obtain a mixture sheet with lower resistance and high toughness.

The lower limit of the average secondary particle size of the powdered PTFE is more preferably 450 µm, and further preferably 500 µm. The upper limit of the secondary particle size is more preferably not more than 700 µm, and further preferably not more than 600 µm. The secondary particle size can be determined, for example, by a sieving method.

The powdered PTFE has an average primary particle size of preferably 150 nm or more because this allows a mixture sheet having higher strength and excellent homogeneity to be obtained. More preferably, the average primary particle size is 180 nm or more, further preferably 210 nm or more, and particularly preferably 220 nm or more.

The larger the average primary particle size of the PTFE, the more the extrusion pressure can be suppressed and the better the formability is upon extrusion the powder. The upper limit may be 500 nm, but is not limited thereto. From the viewpoint of productivity in the polymerization step, the upper limit is preferably 350 nm.

The average primary particle size can be determined by, using an aqueous dispersion of PTFE obtained by polymerization, creating a calibration curve plotting the transmission of 550 nm incident light with respect to the unit length of the aqueous dispersion having a polymer concentration adjusted to 0.22% by mass versus the average primary particle size determined by measuring the directional diameter in a transmission-type electron micrograph, and measuring the transmission of the aqueous dispersion to be measured.

The PTFE used in the present disclosure may have a core-shell structure. Examples of PTFE having a core-shell structure include a polytetrafluoroethylene that includes in the particle a core of high molecular weight polytetrafluoroethylene and a shell of a lower molecular weight polytetrafluoroethylene or modified polytetrafluoroethylene. Examples of the modified polytetrafluoroethylene include the polytetrafluoroethylenes described in Japanese Translation of PCT International Application Publication No. 2005-527652.

Powered PTFE that satisfies each of the above-described parameters can be obtained by a conventional manufacturing method. For example, such powdered PTFE may be produced in accordance with the production methods described in International Publication No. WO 2015-080291, International Publication No. WO 2012-086710, and the like.

In the present disclosure, the lower limit of the binder content in the solid-state secondary battery mixture is preferably 0.2% by mass or more, and more preferably 0.3% by mass or more. Further preferably, the lower limit is more than 0.5% by mass. The upper limit of the binder content in the solid-state secondary battery mixture is preferably 10% by mass or less, more preferably 7% by mass or less, particular preferably 6% by mass or less, further preferably 4% by mass or less, still further preferably 1.7% by mass or less, and most preferably 1.0% by mass or less. If the binder is within the above range, it is possible to form a self-supporting sheet having excellent handleability while suppressing an increase in electrode resistance.

The solid-state electrolyte used in the solid-state secondary battery mixture of the present disclosure is a sulfide-based solid-state electrolyte. When using a sulfide-based solid-state electrolyte, there is an advantage in that there is flexibility.

Examples of the sulfide-based solid-state electrolyte include a lithium ion conductive inorganic solid-state electrolyte that satisfies the composition represented by the following formula (1):

Liₐ₁M_{b1}P_{c1}S_{d1}Aₑ₁ (1)

wherein M represents an element selected from B, Zn, Sn, Si, Cu, Ga, Sb, Al, Ti, and Ge, A represents an element selected from I, Br, Cl and F, a1 to e1 indicate a composition ratio of each element, a1:b1:c1:d1:e1 satisfies 1 to 12:0 to 5:1:2 to 12:0 to 10, a1 is preferably 1 to 9, more preferably 1.5 to 7.5, b1 is preferably 0 to 3, more preferably 0 to 1, d1 is preferably 2.5 to 10, more preferably 3.0 to 8.5, and e1 is preferably 0 to 5, more preferably 0 to 3.

In the present disclosure, the sulfide-based solid-state electrolyte preferably contains lithium. Lithium-containing sulfide-based solid-state electrolytes are used in solid-state batteries that use lithium ions as carriers, and are particularly preferred for electrochemical devices having a high energy density.

The composition ratio of each element can be controlled by adjusting the blending amount of the raw material compounds when producing the sulfide-based inorganic solid-state electrolyte, as described below.

The sulfide-based inorganic solid-state electrolyte may be amorphous (glass) or crystallized (glass-ceramic), or only partially crystallized. For example, Li-P-S glass containing Li, P, and S, or Li-P-S glass ceramic containing Li, P, and S can be used.

The sulfide-based inorganic solid-state electrolyte can be produced by reacting at least two or more raw materials from among, for example, lithium sulfide (Li₂S), a phosphorus sulfide (for example, diphosphorus pentasulfide (P₂S₅)), elemental phosphorus, elemental sulfur, sodium sulfide, hydrogen sulfide, a lithium halide (for example, LiI, LiBr, LiCl), and a sulfide of the above-described element represented by M (for example, SiS₂, SnS, GeS₂).

As specific examples of the sulfide-based inorganic solid-state electrolyte, examples of raw material combinations are shown below. Examples of such combinations include Li₂S-P₂S₃-LiCl, Li₂S-P₂S₅-H₂S, Li₂S-P₂S₅-H₂S-LiCl, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SiS₂-LiCl, Li₂S-P₂S₅-SnS, Li₂S-P₂S₅-Al₂S₃, Li₂S-GeS₂, Li₂S-GeS₂-ZnS, Li₂S-Ga₂S3, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂SAl₂S₃, Li₂S-SiS₂-Al₂S₃, Li₂S-SiS₂-P₂S₅, Li₂S-SiS₂-P₂S₅-LiI, Li₂S-SiS₂-LiI, Li₂S-SiS₂-Li₄SiO₄, Li₂S-SiS₂-Li₃PO₄, Li₁₀GeP₂S₁₂, and the like. However, the mixing ratio of each raw material is not limited.

In particular, it is preferred that the sulfide-based solid-state electrolyte is a sulfide-based solid-state electrolyte satisfying the composition represented by the following formula (A):

aLi₂S-bX¹S₂-cLiX²-(1-a-b-c)P₂S₅ (A)

wherein 0.6≤a≤0.86, 0≤b≤0.333, 0≤c≤0.3, 0.05≤b+c≤0.4, X¹ represents Ge, Sn, Ti or Si, X² represents Cl, Br, or I, and any one of b or c is not 0.

Using a sulfide-based solid-state electrolyte satisfying the composition represented by the above formula (A) is advantageous in that high ion conductivity can be stably obtained.

Specific examples of the sulfide-based solid-state electrolyte represented by the above formula (A) may be selected from any of 0.714 Li₂S - 0.143 SnS₂ - 0.143 P₂S₅ (Li₁₀SnP₂S₁₂ (LSPS)), 0.625 Li₂S - 0.25 LiCl - 0.125 P₂S₅ (Li₆PS₅Cl(LPSCl)), 0.715 Li₂S - 0.143 GeS2 - 0.142 P₂S₅ (Li₁₀GeP₂S₁₂ (LGPS)), and the like, or a mixture of two or more types can be used.

The average particle size of the sulfide-based solid-state electrolyte is preferably 0.1 µm or more and 20 µm or less. The upper limit is more preferably 0.2 µm. or more, and further preferably 0.3 µm or more. The upper limit is more preferably 18 µm or less, and further preferably 15 µm or less.

If the average particle size of the sulfide-based solid-state electrolyte is less than 0.1 µm, handling of the powder may be difficult. On the other hand, if the average particle size of the sulfide-based solid-state electrolyte exceeds 20 µm, press formability may deteriorate.

The average particle diameter of the sulfide-based solid-state electrolyte particles is measured by the following procedure.

A dispersion is prepared by diluting the sulfide-based solid-state electrolyte particles with water (heptane for materials unstable in water) to 1% by mass in a 20 ml sample bottle. Ultrasonic waves of 1 kHz are applied on the diluted dispersion sample for 10 minutes, and the test is immediately carried out after that. Using the dispersion sample, a laser diffraction/scattering particle size distribution analyzer LA-920 (manufactured by HORIBA) is used to acquire data 50 times using a quartz cell for measurement at a temperature of 25°C to obtain the volume average particle size. For other detailed conditions, refer to the description of JIS Z8828:2013 "Particle size analysis-dynamic light scattering method" if necessary. Five samples are prepared for each level and the average value is taken.

The method for adjusting the average particle size of the sulfide solid-state electrolyte is not limited, and may be carried out, for example, as follows. A known crusher or classifier is used. For example, a mortar, a sand mill, a ball mill, a jet mill, or a sieve is preferably used. Depending on the properties of the solid-state electrolyte, a solvent such as water or ethanol may be added during crushing. To obtain a desired particle size, it is preferable to perform classification. The classification is not limited, and may be performed using a sieve, a wind classifier, or the like.

The content of the sulfide-based solid-state electrolyte in the solid components of the secondary battery mixture is, when considering a reduction of interfacial resistance and maintenance of the reduced interfacial resistance when used in a solid-state secondary battery, with respect to 100% by mass of the solid components, in the electrode preferably 5% by mass or more, more preferably 9% by mass or more, and particularly preferably 12% by mass or more. From the viewpoint of battery capacity, the upper limit is preferably 60% by mass or less, more preferably 50% by mass or less, and particularly preferably 40% by mass or less.

Further, in the solid-state electrolyte layer provided between the positive electrode and the negative electrode, the content is preferably 50% by mass or more, more preferably 60% by mass or more, and particularly preferably 70% by mass or more. From the same viewpoint, the upper limit is preferably 99.9% by mass or less, more preferably 99.8% by mass or less, and particularly preferably 99.7% by mass or less.

The sulfide-based solid-state electrolyte may be used alone or in combination of two or more.

As used herein, the solid content (solid components) refers to the components that do not disappear through volatilization or evaporation when drying is performed at 170°C for 6 hours in a nitrogen atmosphere.

The secondary battery mixture of the present disclosure is particularly suitable for a lithium ion solid-state secondary battery.

The secondary battery mixture of the present disclosure is typically used in sheet form when used in a solid-state secondary battery.

The secondary battery mixture sheet of the present disclosure can be a sheet for a positive electrode or a sheet for a negative electrode. Further, it can be a sheet for a solid-state electrolyte layer.

Among these, when used as an electrode sheet, the secondary battery mixture sheet of the present disclosure further contains active material particles. The active material particles can be used as a positive electrode active material or a negative electrode active material. The secondary battery mixture sheet of the present disclosure can be more suitably used as a sheet for a positive electrode using a positive electrode active material. Moreover, when used as an electrode sheet, the secondary battery sheet of the present disclosure may optionally contain a conductive aid.

The electrode active material, conductive aid, and the like will be described below.

### (Electrode active material)

When the secondary battery mixture sheet of the present disclosure is used as a sheet for a positive electrode, the secondary battery mixture sheet includes a positive electrode active material. As the positive electrode active material, a positive electrode active material known as a positive electrode active material for solid-state batteries can be employed. In particular, it is preferable to use a positive electrode active material capable of absorbing and desorbing lithium ions.

The positive electrode active material is not limited as long as it can electrochemically absorb and desorb alkali metal ions. For example, a material containing an alkali metal and at least one transition metal is preferred. Specific examples include alkali metal-containing transition metal composite oxides, alkali metal-containing transition metal phosphate compounds, conductive polymers, and the like.

Among them, as the positive electrode active material, an alkali metal-containing transition metal composite oxide that produces a high voltage is particularly preferable. Examples of the alkali metal ions include lithium ions, sodium ions, and potassium ions. In a preferred embodiment, the alkali metal ions may be lithium ions. That is, in this embodiment, the alkali metal ion secondary battery is a lithium ion secondary battery.

Examples of the alkali metal-containing transition metal composite oxide include:
an alkali metal-manganese spinel composite oxide represented by the formula:

   MₐMn_{2-b}M¹_{b}O₄
wherein M is at least one metal selected from the group consisting of Li, Na and K, 0.9≤a; 0≤b≤1.5, and M¹ is at least one metal selected from the group consisting of Fe, Co, Ni, Cu, Zn, Al, Sn, Cr, V, Ti, Mg, Ca, Sr, B, Ga, In, Si, and Ge,
an alkali metal-nickel composite oxide represented by the formula:

   MNi_{1-c}M²cO₂
wherein M is at least one metal selected from the group consisting of Li, Na and K, 0≤c≤0.5, and M² is at least one metal selected from the group consisting of Fe, Co, Mn, Cu, Zn, Al, Sn, Cr, V, Ti, Mg, Ca, Sr, B, Ga, In, Si, and Ge, or
an alkali metal-cobalt composite oxide represented by the formula:

   MCo_{1-d}M³_{d}O₂
wherein M is at least one metal selected from the group consisting of Li, Na and K, 0≤d≤0.5, and M³ is at least one metal selected from the group consisting of Fe, Ni, Mn, Cu, Zn, Al, Sn, Cr, V, Ti, Mg, Ca, Sr, B, Ga, In, Si, and Ge. In the above, M is preferably one metal selected from the group consisting of Li, Na and K, more preferably Li or Na, and further preferably Li.

Among these, from the viewpoint of being able to provide a secondary battery with high energy density and high output, MCoO₂, MMnO₂, MNiO₂, MMn₂O₄, MNi_{0.8}Co_{0.15}Al_{0.05}O₂, MNi_{1/3}Co_{1/3}Mn_{1/3}O₂ and the like are preferable, and a compound represented by the following general formula (3) is preferred:

MNiₕCoᵢMnⱼM⁵ₖO₂ (3)

wherein M is at least one metal selected from the group consisting of Li, Na and K; M⁵ represents at least one selected from the group consisting of Fe, Cu, Zn, Al, Sn, Cr, V, Ti, Mg, Ca, Sr, B, Ga, In, Si, and Ge, (h+i+j+k)=1.0, 0≤h≤1.0, 0≤i≤1.0, 0≤j≤1.5, and 0≤k≤0.2.

Examples of the alkali metal-containing transition metal phosphate compound include compounds represented by the following formula (4):

MₑM⁴_{f}(PO₄)_{g} (4)

wherein M is at least one metal selected from the group consisting of Li, Na and K, M⁴ is at least one selected from the group consisting of V, Ti, Cr, Mn, Fe, Co, Ni, and Cu, 0.5≤e≤3, 1≤f≤2, and 1≤g≤3. In the above, M is preferably one metal selected from the group consisting of Li, Na and K, more preferably Li or Na, and further preferably Li.

The transition metal of the lithium-containing transition metal phosphate compound is preferably V, Ti, Cr, Mn, Fe, Co, Ni, Cu, or the like. Specific examples include iron phosphates such as LiFePO₄, Li₃Fe₂(PO₄)₃, and LiFeP₂O₇, cobalt phosphates such as LiCoPO₄, and lithium-containing transition metal phosphate compounds in which a part of the transition metal atoms that are the main component of these lithium-transition metal phosphate compounds is replaced with another element such as Al, Ti, V, Cr, Mn, Fe, Co, Li, Ni, Cu, Zn, Mg, Ga, Zr, Nb, or Si.

The lithium-containing transition metal phosphate compound preferably has an olivine structure.

Examples of other positive electrode active materials include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃ (where M is at least one metal selected from the group consisting of Li, Na and K) and the like. In particular, positive electrode active materials such as M₂MnO₃ and MNi_{0.5}Mn_{1.5}O₂ are preferable from the viewpoint that the crystal structure does not collapse when the secondary battery is operated at a voltage exceeding 4.4 V or 4.6 V or higher. Therefore, electrochemical devices such as secondary batteries using a positive electrode material including the positive electrode active material exemplified above are preferable because even when they are stored at high temperatures, they are less likely to suffer a decrease in remaining capacity, less likely to undergo a change in resistance increase rate, and do not suffer from a decrease in battery performance even when operated at a high voltage.

Examples of other positive electrode active materials include a solid solution material of M₂MnO₃ with MM⁶O₂ (where M is at least one metal selected from the group consisting of Li, Na and K, and M⁶ is a transition metal such as Co, Ni, Mn, or Fe), and the like.

Examples of the solid solution material include alkali metal-manganese oxides represented by the general formula Mx[Mn_{(1-y)}M⁷_{y}]O_{z}. Here, M is at least one metal selected from the group consisting of Li, Na and K, and M⁷ includes at least one metal element other than M and Mn and one or two or more elements selected from the group consisting of Co, Ni, Fe, Ti, Mo, W, Cr, Zr, and Sn. Further, the values of x, y, and z in the formula are in the ranges of 1<x<2, 0≤y<1, and 1.5<z<3. Among them, a manganese-containing solid solution material such as Li_{1.2}Mn_{0.5}Co_{0.14}Ni_{0.14}O₂ in which LiNiO₂ or LiCoO₂ is dissolved as a solid solution in a base of Li₂MnO₃ is preferable from the viewpoint that an alkali metal ion secondary battery having a high energy density can be provided.

Further, it is preferable to include lithium phosphate in the positive electrode active material because continuous charging characteristics are improved. Although the use of lithium phosphate is not limited, it is preferable to use a mixture of the above-described positive electrode active material and lithium phosphate. The lower limit of the amount of lithium phosphate used is preferably not less than 0.1% by mass, more preferably not less than 0.3% by mass, and further preferably not less than 0.5% by mass, based on the total of the positive electrode active material and lithium phosphate. The upper limit is preferably not more than 10% by mass, more preferably not more than 8% by mass, and further preferably not more than 5%, based on the total of the positive electrode active material and lithium phosphate.

Examples of the conductive polymer include p-doping type conductive polymers and n-doping type conductive polymers. Examples of the conductive polymer include polyacetylene-based polymers, polyphenylene-based polymers, heterocyclic polymers, ionic polymers, ladder and network polymers, and the like.

The positive electrode active material may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

These surface-attached substances can be attached to the surface of the positive electrode active material by, for example, a method of dissolving or suspending the substance in a solvent, impregnating or adding it to the positive electrode active material, and then drying, or a method of dissolving or suspending a precursor of the surface-attached substance in a solvent, impregnating or adding it to the positive electrode active material, and then causing the surface-attached substance to react by heating or the like, or a method of attaching the substance to the surface of the positive electrode active material by sintering the substance at the same time as adding it to a precursor of the positive electrode active material. In addition, in the case of attaching carbon, a method of mechanically attaching carbonaceous matter in the form of activated carbon or the like later can also be used.

Based on the mass relative to the positive electrode active material, the lower limit of the amount of the surface-attached substance is preferably not less than 0.1 ppm, more preferably not less than 1 ppm, and further preferably not less than 10 ppm, and the upper limit is preferably not more than 20%, more preferably not more than 10%, and further preferably not more than 5%. The surface-attached substance can inhibit an oxidation reaction between the solid-state electrolyte at the surface of the positive electrode active material, which enables battery life to be improved. If the attached amount is too small, the effect may not be sufficiently exhibited, and if the attached amount is too large, the resistance may increase due to absorption/desorption of the lithium ions being inhibited.

Examples of the shape of the particles of the positive electrode active material include conventionally used shapes, such as mass-shaped, polyhedral, spherical, oval, plate-shaped, needle-shaped, and columnar-shaped. Further, primary particles may be aggregated to form secondary particles.

The tapped density of the positive electrode active material is preferably 0.5 g/cm³ or more, more preferably 0.8 g/cm³ or more, and further preferably 1.0 g/cm³ or more. If the tapped density of the positive electrode active material is lower than this lower limit, the amount of dispersion medium required for forming the positive electrode active material layer may increase, the required amounts of the conductive material and the binder may increase, the filling ratio of the positive electrode active material to the positive electrode active material layer may be limited, and the battery capacity may be limited. By using a complex oxide powder with a high tapped density, a high density positive electrode active material layer can be formed. Generally, the higher the tapped density, the better. Although there is no upper limit, if the tapped density is too large, the diffusion of lithium ions in the positive electrode active material layer using the solid-state electrolyte as a medium becomes rate-determining, and the load characteristics tend to deteriorate. Therefore, the upper limit is preferably not more than 4.0 g/cm3, more preferably not more than 3.7 g/cm³, and further preferably not more than 3.5 g/cm³.

In the present disclosure, the tapped density is determined as the powder filling density (tapped density) g/cm³ when 5 to 10 g of the positive electrode active material powder is placed in a 10 ml glass graduated cylinder and tapped 200 times with a stroke of about 20 mm.

The median diameter d50 of the particles of the positive electrode active material (secondary particle size when primary particles aggregate to form secondary particles) is preferably 0.3 µm or more, more preferably 0.5 µm or more, further preferably 0.8 µm or more, and most preferably 1.0 µm or more, and is preferably 30 µm or less, more preferably 27 µm or less, further preferably 25 µm or less, and most preferably 22 µm or less. If the median diameter d50 is less than this lower limit, it may not be possible to obtain a high tapped density product, and if median diameter d50 exceeds the upper limit, it takes time for the lithium to diffuse within the particles, which may result in problems such as a decrease in battery performance and the occurrence of streaks when forming the positive electrode of the battery, that is, when preparing a slurry of the active material, conductive material, binder, and the like with a solvent and coating the slurry as a thin film. Here, by mixing two or more types of the above-described positive electrode active material having different median diameters d50, the filling property at the time of forming the positive electrode can be further improved.

In addition, in the present disclosure, the median diameter d50 is measured by a known laser diffraction/scattering particle size distribution measurement apparatus. When the LA-920 manufactured by HORIBA is used as a particle size distribution analyzer, a 0.1% by mass sodium hexametaphosphate aqueous solution is used as a dispersion medium for measurement, and the measurement is carried out by setting a measurement refractive index of 1.24 after performing ultrasonic dispersion for 5 minutes.

In a case in which primary particles aggregate to form secondary particles, the average primary particle size of the positive electrode active material is preferably 0.05 µm or more, more preferably 0.1 µm or more, and further preferably 0.2 µm or more. The upper limit is preferably not more than 5 µm, more preferably not more than 4 µm, further preferably not more than 3 µm, and most preferably not more than 2 µm. If the upper limit is exceeded, it is difficult to form spherical secondary particles, which adversely affects the powder filling property and greatly reduces the specific surface area, and as a result there may be an increased possibility of a decrease in battery performance such as output characteristics. Conversely, if the average primary particle size is lower than the above-described lower limit, problems such as poor reversibility of charge/discharge may occur due to underdevelopment of crystals.

In addition, in the present disclosure, the average primary particle size of the positive electrode active material is measured by observation using a scanning electron microscope (SEM). Specifically, the average primary particle size is determined by, in a photograph at a magnification of 10,000 times, determining the value of the maximum length of a section formed by the left and right boundary lines of the primary particles with respect to a straight line in the horizontal direction for 50 arbitrary primary particles, and taking the average value thereof.

The BET specific surface area of the positive electrode active material is preferably 0.1 m²/g or more, more preferably 0.2 m²/g or more, and further preferably 0.3 m²/g or more. The upper limit is preferably not more than 50 m²/g, more preferably not more than 40 m²/g, and further preferably not more than 30 m²/g. If the BET specific surface area is smaller than this range, battery performance tends to decrease. If the BET specific surface area is larger than this range, it is harder for the tapped density to increase, and problems in the coating property when forming the positive electrode active material layer can tend to occur.

In the present disclosure, the BET specific surface area is defined as the value obtained by, using a surface area meter (for example, a fully automatic surface area measurement apparatus manufactured by Okura Riken), pre-drying a sample at 150°C for 30 minutes under a nitrogen flow, and then performing the measurement by the nitrogen adsorption BET one-point method according to a gas flow method using a nitrogen-helium mixed gas precisely adjusted so that the value of the relative pressure of nitrogen to atmospheric pressure is 0.3.

When the secondary battery of the present disclosure is used as a large lithium ion secondary battery for a hybrid automobile or a distributed power source, a high output is required, and it is preferred that the particles of the positive electrode active material are mainly secondary particles.

The particles of the positive electrode active material preferably include 0.5 to 7.0% by volume of fine particles having an average secondary particle size of 40 µm or less and an average primary particle size of 1 µm or less. By containing fine particles with an average primary particle size of 1 µm or less, the contact area with the solid-state electrolyte increases, so the diffusion of lithium ions between the sheet for the all-solid-state secondary battery and the solid-state electrolyte can be made faster, and as a result the output performance of the battery can be improved.

As a method for producing the positive electrode active material, a general method for producing an inorganic compound is used. To produce a spherical or oval active material in particular, various methods are conceivable. For example, a transition metal raw material may be dissolved or pulverized and dispersed in a solvent such as water, the pH adjusted while stirring to prepare a spherical precursor, which is collected and optionally dried, the Li source such as LiOH, Li₂CO₃, or LiNO₃ is added, and then sintering is carried out at a high temperature to obtain the active material.

To produce the positive electrode, the above-described positive electrode active material may be used alone, or two or more types having different compositions may be used in any combination or ratio. Preferred combinations in this case include a combination of LiCoO₂ and a ternary system such as LiNi_{0.33}Co_{0.33}Mn_{0.33}O₂, a combination of LiCoO₂ and LiMn₂O₄ or a material in which a part of the Mn are replaced with another transition metal or the like, or a combination of LiFePO₄ and LiCoO₂ or a material in which a part of the Co are replaced with another transition metal or the like.

The content of the positive electrode active material is preferably 40% by mass or more, more preferably 50% by mass or more, and particularly preferably 60% by mass or more. Further, the upper limit is preferably not more than 94.8% by mass, more preferably not more than 90.5% by mass, and particularly preferably not more than 87.5% by mass. If the content of the positive electrode active material in the positive electrode mixture is low, the electric capacity may be insufficient. Conversely, if the content is too high, the electron/ion conductivity and strength of the positive electrode may be insufficient.

Examples of the negative electrode active material include, but are not limited to, any selected from lithium metal, carbonaceous matter materials such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor grown carbon fiber, natural graphite, and non-graphitizing carbon, silicon-containing compounds such as silicon and silicon alloys, Li₄Ti₅O₁₂, and the like, or a mixture of two or more types of these. Among them, those at least partially including a carbonaceous matter material and silicon-containing compounds can be particularly preferably used.

The content of the negative electrode active material is preferably 40% by mass or more, more preferably 50% by mass or more, and particularly preferably 60% by mass or more. Further, the upper limit is preferably not more than 94.8% by mass, more preferably not more than 90.5% by mass, and particularly preferably not more than 87.5% by mass. If the content of the negative electrode active material in the negative electrode mixture is low, the electric capacity may be insufficient. Conversely, if the content is too high, the electron/ion conductivity and strength of the negative electrode may be insufficient.

### (Conductive aid)

As the conductive aid, any known conductive material can be used. Specific examples include metal materials such as copper and nickel, and carbon materials, for example, graphite such as natural graphite and artificial graphite, carbon black such as acetylene black, ketjen black, channel black, furnace black, lamp black, and thermal black, and amorphous carbons such as needle coke, carbon nanotubes, fullerenes, and VGCF. One type of these may be used alone, or two or more types may be used in any combination or ratio.

In the case of using a conductive aid, the conductive aid is used such that it has a content in the electrode active material layer of usually 0.01% by mass or more, preferably 0.1% by mass or more, and more preferably 0.5% by mass or more, and usually 50% by mass or less, preferably 30% by mass or less, and more preferably 15% by mass or less. If the content is lower than this range, the electric conductivity may be insufficient. Conversely, if the content is higher than this range, the battery capacity may decrease.

### (Other components)

The secondary battery mixture sheet may further include a thermoplastic resin.

Examples of the thermoplastic resin include vinylidene fluoride, polypropylene, polyethylene, polystyrene, polyethylene terephthalate, and polyethylene oxide. One type of these may be used alone, or two or more types may be used together in any combination and ratio.

The proportion of the thermoplastic resin to the electrode active material is in the range of usually 0.01% by mass or more, preferably 0.05% by mass or more, and more preferably 0.10% by mass or more, and is in the range of usually 3.0% by mass or less, preferably 2.5% by mass or less, and more preferably 2.0% by mass or less. By adding a thermoplastic resin, the mechanical strength of the electrode can be improved. If this range is exceeded, the proportion of the active material in the mixture will decrease, which may cause problems such as a decrease in battery capacity and an increase in resistance between active materials.

In the secondary battery mixture sheet of the present disclosure, as a proportion of the binder in the secondary battery mixture sheet, the binder content is usually 0.2% by mass or more, preferably 0.3% by mass or more, and more preferably 0.5% by mass or more, and is usually 10% by mass or less, preferably 6.0% by mass or less, more preferably 4% by mass or less, still further preferably 1.7% by mass or less, and most preferably 1.0% by mass or less. If the binder proportion is too low, the active material cannot be retained sufficiently in the secondary battery mixture sheet, and the mechanical strength of the secondary battery mixture sheet is insufficient, which may cause a battery performance such as cycle characteristics to worsen. On the other hand, if the binder proportion is too high, this may lead to a decrease in battery capacity and electric conductivity.

### (Production method)

The method for producing a secondary battery mixture sheet of the present disclosure preferably uses a raw material composition obtained by mixing the components described above, and forms this raw material composition into a sheet. When forming the sheet, a drying process can be omitted, and thus a method in which a shear stress is applied to the raw material composition, which is a powder, either by reducing the amount of liquid medium used or not using a liquid medium at all, and a slurry is not prepared, is preferable. Further, a small amount of solvent may be added as a lubricant to reduce the load on the device. The solvent is preferably an organic solvent, and the amount of solvent contained is, with respect to the raw material composition, preferably 10% by mass or less, more preferably 5% by mass or less, and further preferably 3% by mass or less.

The method for producing the secondary battery mixture sheet of the present disclosure is not limited, and an example of a specific method thereof is as follows.

The secondary battery mixture sheet of the present disclosure can be obtained by a method for producing a mixture sheet for a secondary battery having:
a step (1) of applying a shear force while mixing a raw material composition including an oxide-based solid-state electrolyte and a binder;
a step (2) of forming the secondary battery mixture obtained in step (1) into a bulk shape; and
a step (3) of rolling the bulk-shape secondary battery mixture obtained in step (2) into a sheet shape.

At the stage of applying a shear force while mixing the raw material composition in step (1), the obtained secondary battery mixture is present in an undetermined form in which the oxide-based solid-state electrolyte, binder, and the like are simply mixed. Examples of specific mixing methods include methods of mixing using a W-type mixer, a V-type mixer, a drum-type mixer, a ribbon mixer, a conical screw-type mixer, a single-screw kneader, a twin-screw kneader, a mix-muller, an agitating mixer, a planetary mixer, a Henschel mixer, high-speed mixer, and the like.

In step (1), the mixing conditions may be appropriately set in terms of rotation speed and mixing time. For example, the number of revolutions is preferably 15,000 rpm or less. The number of revolutions is in the range of preferably 10 rpm or more, more preferably 1,000 rpm or more, and further preferably 3,000 rpm or more, and is in the range of preferably 12,000 rpm or less, more preferably 11,000 rpm or less, and further preferably 10,000 rpm or less. If the number of rotations is less than the above range, the mixing takes time, which affects productivity. On the other hand, if the number of rotations exceeds the above range, excessive fibrillation may occur, resulting in a mixture sheet with inferior strength.

In step (1), the mixing is preferably carried out at a temperature of 30°C or higher, and more preferably at 60°C or higher.

Further, before step (1), it is preferred to include a step (A) of mixing the raw material composition to disperse the binder. In step (A), it is preferred to mix with as little shear force as possible.

In step (A), the mixing conditions may be appropriately set in terms of rotation speed and mixing time. For example, the number of revolutions is preferably 500 rpm or less. The number of revolutions is in the range of preferably 20 rpm or more, more preferably 30 rpm or more, and further preferably 40 rpm or more, and is in the range of preferably 400 rpm or less, more preferably 300 rpm or less, and further preferably 200 rpm or less.

In step (A), the mixing temperature is preferably 19°C or lower.

By using such a temperature range, it is possible to process into a desired sheet shape in a shorter time.

PTFE has two transition temperatures at about 19°C and about 30°C. Below 19°C, PTFE can be easily mixed while maintaining its shape. However, above 19°C, the structure of the PTFE particles becomes looser, and the PTFE becomes more sensitive to mechanical shear. At temperatures above 30°C, a higher degree of fibrillation begins to occur.

As described above, it is preferred that the raw material composition is substantially free of a liquid medium, and is preferably a powder. In the powder raw material composition, the content of the liquid medium is preferably 1% by mass or less.

Therefore, when a PTFE resin is used as the fibrillatable resin, it is preferred that step (A) is carried out at a temperature of 19°C or lower, and preferably at 0°C to 19°C.

That is, in such step (A), it is preferable to uniformly mix the raw material composition without causing fibrillation. It is then preferable to perform fibrillation in the subsequent steps (1) to (5).

In step (2), forming into a bulk shape means forming the secondary battery mixture into one mass.

Specific methods of forming into a bulk shape include extrusion, press forming, and the like.

Further, the term "bulk shape" does not specify a specific shape, and the shape may be in any form as a single mass, including a rod shape, a sheet shape, a spherical shape, a cubic shape, and the like. As for the size of the mass, it is preferable that the diameter of the cross section or the minimum size is 10,000 µm or more, and more preferably 20,000 µm or more.

Examples of the specific rolling method in step (3) include a method of rolling using a roll press machine, a flat plate press machine, a calender roll machine, or the like.

Moreover, it is also preferable to have, after the step (3), a step (4) of applying a larger load to the obtained roll sheet and rolling it into a thinner sheet. It is also preferable to repeat step (4). In this way, the flexibility is improved by rolling the sheet little by little in stages instead of thinning the roll sheet all at once.

The number of times that step (4) is carried out is preferably 2 or more and 10 or less, and more preferably 3 or more and 9 or less.

A specific rolling method is to, for example, rotate two or a plurality of rolls and pass the roll sheet between the rolls to form a thinner sheet.

Further, from the viewpoint of adjusting the fibril diameter, it is preferable to have, after step (3) or step (4), a step (5) of coarsely crushing the roll sheet, then again forming into a bulk shape, and rolling into a sheet. It is also preferable to repeat step (5). The number of times that step (5) is carried out is preferably 1 time or more and 12 times or less, and more preferably 2 times or more and 11 times or less.

In step (5), examples of the specific method of coarsely crushing and forming the roll sheet into a bulk shape include a method of folding the roll sheet, a method of forming into a rod or thin sheet shape, a method of chipping, and the like. In the present disclosure, "coarsely crush" means to change the form of the roll sheet obtained in step (3) or step (4) into another form for rolling into a sheet shape in the next step, and may include a case of simply folding a roll sheet.

Step (4) may be performed after step (5), or may be performed repeatedly.

Further, uniaxial stretching or biaxial stretching may be carried out in step (2) as well as steps (3), (4), and (5).

In addition, the fibril diameter (median value) can also be adjusted by the degree of coarse crushing in step (5) .

Steps (2) to (5) are carried out at preferably 30°C or higher, and more preferably 60°C or higher.

In the above steps (3), (4), and (5), the roll rate is preferably in the range of 10% or more, and more preferably 20% or more, and is preferably in the range of 80% or less, more preferably 65% or less, and further preferably 50% or less. If the roll rate is lower than the above range, the rolling takes time as the number of rolls increases, which affects productivity. On the other hand, if the roll rate exceeds the above range, fibrillation may proceed excessively, which may result in a mixture sheet having inferior strength and flexibility.

Here, the roll rate refers to the rate of decrease in the thickness of the sample after rolling with respect to the thickness before rolling. The sample before rolling may be a mixture in a bulk shape or a mixture in a sheet shape. The thickness of the sample refers to the thickness in the direction in which a load is applied during rolling.

As described above, PTFE powder is fibrillated by applying a shearing force. In order to have a fibrous structure with a fibril diameter (median value) of 100 nm or less, if the shear stress is excessive, excessive fibrillation may proceed, which impairs flexibility. Further, if shear stress is weak, strength may not be sufficient. For this reason, during mixing and rolling, the mixture is rolled and stretched into a sheet by applying an appropriate shear stress to the PTFE to promote fibrillation, whereby a fibrous structure with a fibril diameter (median value) of 100 nm or less can be obtained.

As described above, the secondary battery mixture sheet of the present disclosure can be either a sheet for a positive electrode or a sheet for a negative electrode. Further, it can be a sheet for a solid-state electrolyte layer.

When used as a mixture sheet for a positive electrode or a sheet for a negative electrode, in the production of the secondary battery mixture sheet, the positive electrode active material or negative electrode active material may be mixed with the solid-state electrolyte and binder.

The positive electrode and negative electrode are described below.

### (Positive electrode)

In the present disclosure, it is preferable that the positive electrode is constructed from a current collector and the above-described sheet for a positive electrode.

Examples of the material of the current collector for the positive electrode include metals such as aluminum, titanium, tantalum, stainless steel, and nickel, metal materials such as alloys thereof, and carbon materials such as carbon cloth and carbon paper. Among them, a metal material, particularly of aluminum or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape.

The thickness of the metal foil is arbitrary, but is usually 1 µm or more, preferably 3 µm or more, and more preferably 5 µm or more, and usually 1 mm or less, preferably 100 µm or less, and more preferably 50 µm or less. If the metal foil is thinner than this range, it may lack the strength required as a current collector. Conversely, if the metal foil is thicker than this range, handleability may be impaired.

Further, from the viewpoint of reducing the electrical contact resistance between the current collector and the positive electrode mixture sheet, it is preferable to coat the surface of the current collector with a conductive aid. Examples of the conductive aid include carbon and noble metals such as gold, platinum, and silver.

The positive electrode may be produced according to a conventional method. For example, a method of laminating the sheet for a positive electrode and the current collector with an adhesive between them and drying the laminate can be used.

The density of the sheet for a positive electrode is preferably 2.0 g/cm³ or more, more preferably 2.1 g/cm³ or more, and further preferably 2.3 g/cm³ or more, and preferably 4.0 g/cm³ or less, more preferably 3.9 g/cm³ 3 or less, and further preferably 3.8 g/cm³ or less. If the density exceeds this range, the electric conductivity between the active materials decreases, the battery resistance increases, and a high output may not be obtained. If the density is lower than this range, the obtained battery may be hard, tend to crack, have a low active material content, and have a low capacity.

The thickness of the positive electrode is not limited, but from the viewpoint of a high capacity and a high output, the thickness of the mixture sheet after subtracting the thickness of the current collector is, as the lower limit for one side of the current collector, preferably 10 µm or more, and more preferably 20 µm or more, and preferably 500 µm or less, and more preferably 450 µm or less.

The positive electrode may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

### (Negative electrode)

In the present disclosure, it is preferable that the negative electrode is constructed from a current collector and the above-described sheet for a negative electrode.

Examples of the material of the current collector for the negative electrode include metals such as copper, nickel, titanium, tantalum, stainless steel, and nickel, metal materials such as alloys thereof, and carbon materials such as carbon cloth and carbon paper. Among them, a metal material, particularly of copper, nickel, or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape. The thickness of the metal foil is arbitrary, but is usually 1 µm or more, preferably 3 µm or more, and more preferably 5 µm or more, and usually 1 mm or less, preferably 100 µm or less, and more preferably 50 µm or less. If the metal foil is thinner than this range, it may lack the strength required as a current collector. Conversely, if the metal foil is thicker than this range, handleability may be impaired.

The negative electrode may be produced according to a conventional method. For example, a method of laminating the sheet for a negative electrode and the current collector with an adhesive between them and drying the laminate can be used.

The density of the sheet for a negative electrode is preferably 1.3 g/cm³ or more, more preferably 1.4 g/cm³ or more, and further preferably 1.5 g/cm³ or more, and preferably 2.0 g/cm³ or less, more preferably 1.9 g/cm³ or less, and further preferably 1.8 g/cm³ or less. If the density exceeds this range, the penetration of the solid-state electrolyte near the interface between the current collector and the active material decreases, resulting in poor charge/discharge characteristics, especially at high current densities, and a high power output may not be obtained. On the other hand, if the density is lower than this range, the electric conductivity between the active materials decreases, the battery resistance increases, and a high output may not be obtained.

The thickness of the negative electrode is not limited, but from the viewpoint of a high capacity and a high output, the metal foil thickness of the mixture sheet after subtracting the thickness of the current collector is, as the lower limit for one side of the current collector, preferably 10 µm or more, and more preferably 20 µm or more, and preferably 500 µm or less, and more preferably 450 µm or less.

### (Solid-state secondary battery)

The present disclosure also relates to a solid-state secondary battery using the above-described secondary battery mixture sheet.

The solid-state secondary battery may be an all-solid-state secondary battery or a hybrid solid-state secondary battery that combines gel-like polymer electrolyte and a solid-state electrolyte.

Further, the solid-state secondary battery is preferably a lithium ion battery.

The solid-state secondary battery of the present disclosure is a solid-state secondary battery including a positive electrode, a negative electrode, and a solid-state electrolyte layer provided between the positive electrode and the negative electrode. The positive electrode, the negative electrode, and the solid-state electrolyte layer contain a sheet for a positive electrode, a sheet for a negative electrode, or a solid-state electrolyte layer sheet, which are the secondary battery mixture sheet of the present disclosure as described above. In addition, in the solid-state secondary battery of the present disclosure, something other than the secondary battery mixture sheet of the present disclosure may be used for a part of the positive electrode, the negative electrode, and the solid-state electrolyte layer.

The laminated structure of the solid-state secondary battery in the present disclosure includes a positive electrode including the sheet for a positive electrode and a positive electrode current collector, a negative electrode including the sheet for a negative electrode and a negative electrode current collector, and a sulfide-based solid-state electrolyte layer sandwiched between the positive electrode and the negative electrode.

The separator and the battery case used in the solid-state secondary battery according to the present disclosure will be described in detail below.

### (Separator)

The solid-state secondary battery of the present disclosure may have a separator between the positive electrode and the negative electrode. Examples of the separator include a porous membrane such as polyethylene and polypropylene, a nonwoven fabric made of resin such as polypropylene, a nonwoven fabric such as a glass fiber nonwoven fabric, and the like.

### (Battery design)

The solid-state secondary battery of the present disclosure may further include a battery case. The shape of the battery case used in the present disclosure is not limited as long as it can accommodate the above-described positive electrode, negative electrode, electrolyte layer for a sulfide-based solid-state battery, and the like, but specific examples can include a cylindrical shape, a rectangular shape, a coin shape, a laminate, and the like.

The solid-state secondary battery of the present disclosure may be produced by, for example, first laminating the positive electrode, the solid-state electrolyte layer sheet, and the negative electrode in this order, and then pressing to form a solid-state secondary battery.

It is preferable to use the secondary battery mixture sheet of the present disclosure because this enables a solid-state secondary battery to be produced with less moisture in the system, and a solid-state secondary battery with a good performance can be obtained.

### Examples

Hereinafter, the present disclosure will be specifically described based on examples.

In the following examples, "parts" and "%" represent "parts by mass" and "% by mass", respectively, unless otherwise specified.

### [Production Example 1]

At the point when 367 g of TFE (35.6% by mass with respect to the total polymerization amount of TFE of 1032 g) was consumed from the start of polymerization, an aqueous solution of 12.0 mg of hydroquinone as a radical scavenger dissolved in 20 ml of water was charged under pressure with TFE (concentration 4.0 ppm with respect to the aqueous medium). Polymerization was continued thereafter, and when the polymerized amount of TFE reached 1,000 g from the start of polymerization, the supply of TFE was stopped, gas in the system was immediately released to achieve normal pressure, the polymerization reaction ended, and an aqueous dispersion of polytetrafluoroethylene (solid content 31.2% by mass) was obtained. The resulting aqueous dispersion of polytetrafluoroethylene was diluted to a solid content concentration of 15%, and gently stirred in a container equipped with a stirrer in the presence of nitric acid to solidify the polytetrafluoroethylene. The solidified polytetrafluoroethylene was separated and dried at 160°C for 18 hours to obtain powdered PTFE-1.

### [Production Example 2]

Powdered PTFE-2 was obtained by referring to Production Example 3 of International Publication No. WO 2015-080291.

### [Production Example 3]

Powdered PTFE-3 was obtained by referring to Production Example 1 of International Publication No. WO 2012/086710.

### [Production Example 4]

Powdered PTFE-4 was obtained by referring to Reference Example 1 of International Publication No. WO 2012-063622.

Table 1 shows the physical properties of the produced PTFE.

**[Table 1]**

| Produced PTFE | Standard specific gravity | Moisture content (ppm) after drying |
|---|---|---|
| PTFE-1 | 2.16 | <250 |
| PTFE-2 | 2.15 | <250 |
| PTFE-3 | 2.16 | <250 |
| PTFE-4 | 2.19 | <250 |

### (Example 1)

A sulfide-based solid-state electrolyte Li₁₀SnP₂S₁₂ (LSPS, 0.714 Li₂S -0.143 SnS₂ - 0.143 P₂S₅) (average particle size: 7 µm) and powdered PTFE-1 were weighed and mixed with a high-speed mixer (500 rpm, 1 minute). The stirring was performed by cooling the container to 10°C. Then, stirring with a high-speed mixer (10000 rpm, 3 minutes) was carried out to obtain a mixture. The stirring was performed by heating the container to 60°C.

The solid content was adjusted to a mass ratio of solid-state electrolyte:binder=98.5:1.5.

It is noted that the powdered PTFE-1 that was used had been dried in a vacuum dryer at 50°C for 1 hour. The powdered PTFE had been sieved in advance using a stainless steel sieve with an opening of 500 µm, and the material remaining on the sieve was used.

The resulting mixture was formed into a bulk shape and rolled into a sheet. The rolling was performed at a temperature of 80°C.

Then, a step coarsely crushing the roll sheet obtained in the previous step by folding it in two, forming again into a bulk shape, and then rolling into a sheet shape using a metal roll on a flat plate to form fibrils was repeated four times. After that, the sheet was further rolled to obtain a sheet-shaped solid-state electrolyte layer with a thickness of 500 µm. Further, the sheet-shaped solid-state electrolyte layer was cut, put into a press, and rolled.

The thickness was adjusted by repeatedly applying a load of 5 kN. The gap was adjusted so that the thickness of the final solid-state electrolyte layer was 120 µm. It is noted that the above operation was performed in an Ar glove box (dew point of about -80°C).

### (Example 2)

The sulfide-based solid-state electrolyte Li₁₀SnP₂S₁₂ (LSPS) and powdered PTFE-2 were weighed, and formed into a sheet based on the same procedure as in Example 1. The composition ratio was adjusted to the mass ratio shown in Table 2.

### (Example 3)

The sulfide-based solid-state electrolyte Li₁₀SnP₂S₁₂ (LSPS) and powdered PTFE-3 were weighed, and formed into a sheet based on the same procedure as in Example 1. The composition ratio was adjusted to the mass ratio shown in Table 2.

### (Example 4)

The sulfide-based solid-state electrolyte Li₁₀SnP₂S₁₂ (LSPS) and powdered PTFE-4 were weighed, and formed into a sheet based on the same procedure as in Example 1. The composition ratio was adjusted to the mass ratio shown in Table 2.

### (Example 5)

A sulfide-based solid-state electrolyte Li₆PS₅Cl (LPSCl, 0.625 Li₂S - 0.25 LiCl - 0.125 P₂S⁵) (average particle size: 8µm.) and powdered PTFE-1 were weighed, and formed into a sheet based on the same procedure as in Example 1. The composition ratio was adjusted to the mass ratio shown in Table 2.

### (Example 6)

A positive electrode active material LiNi_{0.8}Mn_{0.1}Co_{0.1}O₂, the sulfide-based solid-state electrolyte LPSCl (average particle size: 8µm), and powdered PTFE-1 were weighed, and formed into a sheet based on the same procedure as in Example 1. The composition ratio was adjusted to the mass ratio shown in Table 3.

### (Example 7)

A positive electrode active material LiNi_{0.8}Co_{0.15}Al_{0.05}O₂, the sulfide-based solid-state electrolyte LPSCl (average particle size: 8µm), and powdered PTFE-1 were weighed, and formed into a sheet based on the same procedure as in Example 1. The composition ratio was adjusted to the mass ratio shown in Table 3.

### (Example 8)

A sulfide-based solid-state electrolyte Li₁₀GeP₂S₁₂ (LGPS, manufactured by Ampcera, average particle size: 18µm) and powdered PTFE-2 were weighed, and formed into a sheet based on the same procedure as in Example 1. The composition ratio was adjusted to the mass ratio shown in Table 3.

Each test was carried out as follows.

### [Measurement of moisture content]

The powdered PTFE was dried in a vacuum dryer at 50°C for 1 hour before use. Using a Karl Fischer moisture meter (ADP-511/MKC-510N, manufactured by Kyoto Electronics Industry Manufacturing Co., Ltd.) equipped with a boat-type moisture vaporizer, the moisture content of the PTFE after the vacuum drying was measured by heating to 210°C with the moisture vaporizer and measuring the vaporized moisture. Nitrogen gas was flowed as a carrier gas at a flow rate of 200 mL/min, and the measurement time was 30 minutes. Chem-Aqua was used as the Karl Fischer reagent. The sample amount was 1.5 g.

### [PTFE fibril diameter (median value)]

(1) Using a scanning electron microscope (Model S-4800, manufactured by Hitachi, Ltd.), an enlarged photograph (7,000x) of the sheet-shaped solid-state electrolyte layers was taken to obtain an image.
(2) Two lines equidistant from each other were drawn on the image in the horizontal direction to divide the image into three equal parts.
(3) The diameter of each PTFE fiber on the upper straight line was measured at three locations, and the average value was taken as the PTFE fiber diameter. The three locations to be measured were the intersection between the PTFE fiber and the straight line, and the locations 0.5 µm above and below the intersection (PTFE primary particles not formed into fibrils are excluded).
(4) The task of (3) above was then carried out for all the PTFE fibers on the lower straight line.
(5) Starting from the first image, the sheet-shaped solid-state electrolyte layers was moved 1 mm in the right direction of the screen, photographed again, and the diameter of the PTFE fibers was measured according to the above (3) and (4). This was repeated until the number of fibers measured exceeded 80, and then the measurement was terminated.
(6) The median value of the diameters of all the PTFE fibers measured above was taken as the size of the fibril diameter.

### [Measurement of ion conductivity]

Conductivity was measured by the following method.

A gold electrode was formed on the surface of the produced solid-state electrolyte sheet by sputtering, and then punched to a diameter of 10 mm. The electrode was then sandwiched between stainless steel current collectors, and sealed to form a cell for measurement. This cell was left to stand for 12 hours in an 80°C constant-temperature vessel, and then subjected to AC impedance measurement in a frequency range of 0.1 Hz to 8 MHz using an impedance analyzer (Model 1260 manufactured by Solartron) to determine the ion conductivity.

### [Flexibility evaluation]

A 2 cm long and 6 cm wide test piece was cut from the produced solid-state electrolyte sheet. The test piece was wound around a round bar with a diameter of 4 mm, and then visually observed and evaluated according to the following criteria. Cases in which damage or cracks were not observed were evaluated as "pass" (circle), and cases in which cracks were observed were evaluated as "fail" (cross).

### [Strength measurement]

Using a digital force gauge (ZTS-20N manufactured by Imada), the strength of a strip-shaped electrode mixture test piece with a width of 4 mm under the condition of 100 mm/min was measured. The chuck-to-chuck distance was 30 mm. Displacement was applied until breakage, and the maximum stress obtained in the measured results was taken as the strength of each sample. The tests were carried out five times, and the average value was taken as the evaluation result.

The test results are shown in Tables 2 and 3.

**[Table 2]**

| | Binder | Electrolyte | Solid-state electrolyte: binder | Fibril diameter [nm] | Ion conductivity [mS/cm] | Flexibility | Strength [N/mm²] |
|---|---|---|---|---|---|---|---|
| Example 1 | PTFE-1 | LSPS | 98.5:1.5 | 48 | 2.1 | ○ | 0.33 |
| Example 2 | PTFE-2 | LSPS | 99.2:0.8 | 28 | 2.5 | ○ | 0.15 |
| Example 3 | PTFE-3 | LSPS | 98.5:1.5 | 31 | 1.9 | ○ | 0.24 |
| Example 4 | PTFE-4 | LSPS | 98.5:1.5 | 28 | 2.0 | ○ | 0.14 |
| Example 5 | PTFE-1 | LPSCI | 98.5:0.8 | 39 | 3.3 | ○ | 0.17 |

**[Table 3]**

| | Active material | Binder | Electrolyte | Active material: solid-state electrolyte: binder=85.2: 14:0.8 | Fibril diameter [nm] | Flexibility | Strength [N/mm²] |
|---|---|---|---|---|---|---|---|
| Example 6 | LiNi_{0.8}Mn_{0.1} Co_{0.1}O₂ | PTFE-1 | LPSCI | active material: solid-state electrolyte: binder=85.2: 14:0.8 | 42 | ○ | 0.30 |
| Example 7 | LiNi_{0.8}Co_{0.15} Al_{0.05}O₂ | PTFE-1 | LPSCI | active material: solid-state electrolyte: binder=85.2: 14:0.8 | 49 | ○ | 0.36 |
| Example 8 | LiNi_{0.6}Mn_{0.2} Co_{0.2}O₂ | PTFE-2 | LGPS | active material: solid-state electrolyte: binder=75.1: 24:0.9 | 42 | ○ | 0.30 |

From the results in Tables 2 and 3, the sheet shape solid-state electrolyte layers of the examples had excellent physical properties.

Next, a gold electrode was formed on the surface of the positive electrode mixture sheet produced in Example 8 by sputtering, and then the solid-state electrolyte sheet produced in Example 2, Li foil, and an insulating sheet were stacked thereon. The stack was integrated by uniaxially forming for 3 minutes under a load of 60 kN, and a half cell was produced by punching to a diameter of 10 mm. The produced half cell was placed in a flat cell and placed in a bath at 25°C for 12 hours. Charging and discharging were performed at 0.1 C (0.05 C cut).

As a result of eight charging and discharging cycles, based on 100% at the third cycle, the capacity retention rate at the eighth cycle was 98.4%.

### Industrial Applicability

The secondary battery mixture of the present disclosure and the secondary battery mixture sheet containing the same can be used to produce a solid-state secondary battery.

## Claims

1. A secondary battery mixture, comprising a sulfide-based solid-state electrolyte and a binder,
wherein the binder is a fibrillatable resin.

2. The secondary battery mixture according to claim 1, wherein the fibrillatable resin has a fibrous structure with a fibril diameter (median value) of 100 nm or less.

3. The secondary battery mixture according to claim 1 or 2, wherein the fibrillatable resin is a polytetrafluoroethylene resin.

4. The secondary battery mixture according to any one of claim 1, 2, or 3, wherein the sulfide solid-state electrolyte has an average particle size of 0.1 µm or more and 20 µm or less.

5. The secondary battery mixture according to any one of claims 1, 2, 3, or 4, wherein the sulfide solid-state electrolyte is represented by the following formula (A):
aLi₂S-bX¹S₂-cLiX²-(1-a-b-c)P₂S₅ (A)
wherein 0.6≤a≤0.86, 0≤b≤0.333, 0≤c≤0.3, 0.05≤b+c≤0.4, X¹ represents Ge, Sn, Ti or Si, X² represents Cl, Br, or I, and any one of b or c is not 0.

6. The secondary battery mixture according to claim 1, 2, 3, 4, or 5, which is for a lithium ion solid-state secondary battery.

7. The secondary battery mixture according to claim 1, obtained using a raw material composition containing a sulfide-based solid-state electrolyte and a binder, wherein
the binder in the raw material composition is a powdered fibrillatable resin.

8. The secondary battery mixture according to claim 7, wherein the raw material composition is substantially free of a liquid medium.

9. The secondary battery mixture according to claim 7 or 8, wherein the powdered fibrillatable resin has a moisture content of 500 ppm or less.

10. The secondary battery mixture according to claim 7, 8, or 9, wherein the powdered fibrillatable resin is a powdered polytetrafluoroethylene resin.

11. The secondary battery mixture according to claim 10, wherein the powdered polytetrafluoroethylene resin has a standard specific gravity of 2.12 to 2.20.

12. The secondary battery mixture according to claim 10 or 11, wherein the powdered polytetrafluoroethylene resin includes 50% by mass or more of a polytetrafluoroethylene resin having a secondary particle size of 450 µm or more.

13. A secondary battery mixture sheet comprising the secondary battery mixture according to any one of claims 1 to 12.

14. A method for producing a secondary battery mixture sheet comprising:
(1) applying a shear force while mixing a raw material composition including a sulfide-based solid-state electrolyte and a binder;
(2) forming the secondary battery mixture obtained in (1) into a bulk shape; and
(3) rolling the bulk-shape secondary battery mixture obtained in (2) into a sheet shape,
wherein the binder is a powdered fibrillatable resin.

15. A solid-state secondary battery comprising the secondary battery mixture sheet according to claim 13.
